(19) **Europäisches Patentamt**

**European Patent Office**

**Office européen des brevets**

(11) **EP 0 776 465 B1**

(12) **EUROPÄISCHE PATENTSCHRIFT**

(45) Veröffentlichungstag und Bekanntmachung des Hinweises auf die Patenterteilung:
**10.07.2002 Patentblatt 2002/28**

(51) Int Cl.⁷: **G01H 9/00**

(86) Internationale Anmeldenummer:
**PCT/DE96/00576**

(21) Anmeldenummer: **96907322.0**

(22) Anmeldetag: **21.03.1996**

(87) Internationale Veröffentlichungsnummer:
**WO 97/01082 (09.01.1997 Gazette 1997/03)**

(54) **LASERVIBROMETER FÜR SCHWINGUNGSMESSUNGEN**

LASER VIBROMETER

VIBROMETRE LASER

(84) Benannte Vertragsstaaten:
**DE FR GB IT**

(30) Priorität: **20.06.1995 DE 19522272**

(43) Veröffentlichungstag der Anmeldung:
**04.06.1997 Patentblatt 1997/23**

(73) Patentinhaber: **ROBERT BOSCH GMBH**
**70442 Stuttgart (DE)**

(72) Erfinder:
• **STEINLECHNER, Siegbert**
**D-71229 Leonberg (DE)**

• **DRABAREK, Pawel**
**D-71254 Ditzingen (DE)**
• **VAN KEULEN, Michael**
**D-70499 Stuttgart (DE)**

(56) Entgegenhaltungen:
• **OPTICS COMMUNICATIONS, Bd. 78, Nr. 2, 15.August 1990, Seiten 113-117, XP000138067 MASAAKI IMAI ET AL: "OPTICAL-HETERODYNE DISPLACEMENT MEASUREMENT USING A FREQUENCY-RAMPED LASER DIODE"**

**Beschreibung**

Stand der Technik

Die Erfindung geht aus von einem Laservibrometer für Schwingungsmessungen der im Oberbegriff des Anspruchs 1 definierten Gattung.

Wie bekannt ist, sind insbesondere im Automobilbau eingehende Schwingungsuntersuchungen notwendig, um an Bauteilen Resonanzphänomene zu analysieren. So ist beispielsweise in einem Artikel "Schwingungen visualisieren" von Martin Feser in der ATZ Automobiltechnische Zeitschrift 96 (1994) 7/8, Seite 433 - 435, ein Laser-Scanning-Vibrometer beschrieben, das in berührungsloser Laser-Doppler-Meßtechnik und schneller FFT-Analyse für angetastete Meßpunkte das Frequenzspektrum ermittelt. Ein Kernstück dieses bekannten Scanning-Vibrometers ist ein Einpunktvibrometer. Im Meßkopf wird der Laserstrahl eines Interferometers mit zwei Abtastspiegeln auf die zu untersuchende Fläche gelenkt. Im optischen Meßkopf befindet sich neben dem Laser-Interferometer und den Abtastspiegeln zusätzlich eine Videokamera, mit der das Meßobjekt beobachtet wird. Anhand des Videobildes wird der Abtastbereich mit unterschiedlich einstellbarer Ortsauflösung definiert und anschließend vom Laserstrahl abgetastet. Durch die Möglichkeit der Frequenzbandselektion ist eine Bestimmung der Formen der Betriebsschwingungen gegeben. Das hier beschriebene Meßsystem befaßt sich ausschließlich mit dem Einsatz bei der Messung von Flächenschwingungen, insbesondere am Beispiel von Autotüren. Dabei geht es anhand von wenigen bestimmten Frequenzen um die Feststellung von Stellen, an denen wegen zu großer Schwingungsamplituden Dämpfungsmaßnahmen möglichst bereits in der Konstruktionsphase ermittelt und eingeführt werden sollen.

Dieser bekannte Laservibrometer der Firma Polytec GmbH, D-76337 Waldbronn, ist auch noch hinsichtlich der zugrundeliegenden physikalischen Meßtechnik sowie der gerätetechnischen Ausgestaltung in einem Manual VIB-MAN-9308-e04 im Kapitel 5 auf den Seiten 5-1 bis 5-11 eingehend beschrieben. Dabei wird zur notwendigen Frequenzverschiebung der Laserstrahl mittels eines akustooptischen Modulators in Form einer Bragg-Zelle moduliert. Zur Modulation wird dabei der Bragg-Zelle Hochfrequenzleistung zugeführt. Diese Modulierung des Referenzlaserstrahls erfordert also einen recht kostspieligen akustooptischen Modulator, der mit erheblicher hochfrequenter Modulationsleistung gespeist werden muß und darüber hinaus eine aufwendige Justage erfordert.

In einem Artikel "Diode laser direct modulation heterodyne interferometer" von Kimio Tatsuno und Yoshito Tsunoda in APPLIED OPTICS, Vol. 26, No. 1, 1 January 1987, Seiten 37 bis 40, ist zur Messung der Wellenfront-Aberration optischer Köpfe in Systemen mit optischen Platten ein Interferometer vorgesehen, bei dem durch Veränderung des Injektionsstroms der Laserdiode eine Frequenzverschiebung erzeugt wird.

In dem Artikel 'Optical-Heterodyne Displacement Measurement using a Frequency-Ramped Laser-Diode' von Masaaki Imai et al., Optics Communications, Bd. 78, Nr. 2, 15. August 1990, Seiten 113-117, XP0001138067, ist ein heterodynes Interferometer für die Messung von Versetzungen eines schwingenden Teils beschrieben, wobei eine frequenz-modulierte Laserdiode als Strahlungsquelle verwendet wird. Es wird ein Michelson Interferometer mit einem Strahlteiler und einem Spiegel im Referenzarm und einem Spiegel am Messobjekt im Messarm verwendet. Die von den Spiegeln reflektierten überlagerten Strahlen werden einem Photodetektor und anschließend einem Phasendemodulator zugeführt, um die Auswertung vorzunehmen. Als Messobjekt wird ein Piezoelement verwendet, das von einem Oszillator mit einer Frequenz von 1 kHz angeregt wird und auf welchem zur Sichtbarmachung der Schwingung ein Spiegel angebracht ist.

Bei dieser bekannten Anordnung ist die Länge des Referenzstrahlenganges größer als die Länge des Messstrahlengangs, wobei der Unterschied sehr genau auf $6{,}818 \pm 0{,}004$ cm bestimmt ist. Darüber hinaus wird darauf hingewiesen, dass bei großem Frequenzgang der Laserdiode der Unterschied der Pfadlänge klein sein soll. Die Einhaltung eines so geringen und zusätzlich eng tolerierten Unterschieds ist für Messungen in der Praxis höchst schwierig und daher kaum anwendbar. Nicht erkennbar ist, ob der Michelson-Interferometer für die out of plane Schwingungsmessung verwendet ist. Aus dieser Literaturstelle ist kein Hinweis zu entnehmen, einen Arm wesentlich gegenüber dem anderen zu verlängern. Vielmehr ist zum einen ein erheblich unter dem Bereich der Erfindung befindlicher Wert von $6{,}818 \pm 0{,}004$ cm angegeben und weiterhin, vgl. S. 117 rechte Spalte, Zeilen 2-5 der Hinweis auf kleinen Unterschied in der Pfadlänge expressis verbis gegeben. Dies geht genau in die entgegengesetzte Richtung als bei der Erfindung. Damit stellt die Anordnung gemäß Anspruch 1 eine nicht naheliegende Alternative dar, die dem Fachmann nicht nahegelegen hat und ihm auch nicht nahegelegt wurde.

Vorteile der Erfindung

Der erfindungsgemäße Laservibrometer mit den kennzeichnenden Merkmalen des Anspruchs 1 hat gegenüber dem bekannten Stand der Technik den Vorteil der wesentlich vereinfachten Art der Erzielung der notwendigen Frequenzverschiebung, die kostengünstiger und von der Justage her weniger aufwendig ist. Weiterhin ist durch die wesentliche Vergrößerung des Unterschieds in der Pfadlänge eine ganz erheblich größere Flexibilität gegeben, so dass in der praktischen Anwendung keine Schwierigkeiten gegeben sind. Die Erfindung stellt somit ein kostengünstiges, berührungsfreies optisches Vibrometer zur Verfügung, welches in vielfältiger Weise angewandt werden kann.

Dies wird entsprechend dem Kerngedanken der Erfindung dadurch erzielt, dass ein Interferometerarm gegenüber dem anderen Interferometerarm verlängert ist, die Verlängerung größer als 20 cm und bis zu 100 cm beträgt, und für die axiale, sogenannte out of plane Schwingungsmessung, ein Michelson-Interferometer vorgesehen ist.

Durch die in den weiteren Ansprüchen aufgeführten Maßnahmen sind vorteilhafte Weiterbildungen, Verbesserungen und vorteilhafte Verwendungen des im Anspruch 1 angegebenen Laservibrometers möglich.

Gemäß einer besonders vorteilhaften Ausführungsform der Erfindung ist als Mittel zur Modulierung der Frequenz der Laserstrahlung ein Strommodulator vorgesehen, mit dessen Hilfe der Laserinjektionsstrom moduliert wird. In vorteilhafter Weise wird der Laserinjektionsstrom dabei dreieckförmig oder sägezahnförmig moduliert. Aufgrund dieser Modulation kann bei der Erfindung von einem direkt modulierten Laservibrometer gesprochen werden.

Gemäß zweckmäßiger Weiterbildung des erfindungsgemäßen Laservibrometers erfolgt die dreieckförmige bzw. sägezahnförmige Modulation mit einer Amplitude j und einer Frequenz f der Strommodulation, wobei in vorteilhafter Weise die Amplitude j der Strommodulation im Bereich einiger mA und die Frequenz f der Modulation im Bereich von einem bis zu einigen MHz liegen kann.

Gemäß besonders vorteilhafter Ausgestaltung des erfindungsgemäßen Laservibrometers ist ein Polarisationsstrahlteiler mit zwei Viertelwellenplatten, jeweils eine im Referenzstrahlgang und eine im Messobjektstrahlgang, vorgesehen.

Entsprechend einer weiteren vorteilhaften Ausgestaltung des erfindungsgemäßen Laservibrometers ist der Interferometerarm im Strahlengang zum Meßobjekt als der längere Interferometerarm ausgeführt.

Das erfindungsgemäß gestaltete Laservibrometer lässt sich entsprechend einem vorteilhaften Verfahren nach Anspruch 8 sehr zweckmäßig auf verschiedene Weise verwenden. Dazu ist vorgesehen, dass der Laservibrometer derart angeordnet wird, dass das Gerät oder ein Bauteil davon das Messobjekt bildet, und

die axiale, sogenannte out of plane Schwingung des Gerätes oder des Bauteils davon mit dem Laservibrometer gemessen wird,

um Stellen zu ermitteln, die starke und/oder unangenehme, störende Geräusche verursachen, und/oder,

um Stellen zu ermitteln, an denen durch hohe und/oder frequenzmäßig besonders kritische Schwingungsamplituden Bruchgefahr und/oder die Gefahr vorzeitigen Verschleißes besteht, und/oder,

um rhythmisch wiederkehrende Schwingungen zu ermitteln, die auswertungsmäßig in Drehzahlen, insbesondere von Verbrennungsmotoren, umwandelbar sind.

Zeichnung

Die Erfindung ist anhand eines in der Zeichnung dargestellten Ausführungsbeispiels in der nächfolgenden Beschreibung näher erläutert. Es zeigen:

Fig. 1    in schematischer Darstellung die wesentlichen Komponenten des erfindungsgemäß gestalteten direkt modulierten Laservibrometers;

Fig. 2    schematisch den sägezahnförmig modulierten Injektionsstrom j der Laserdiode über der Zeit t;

Fig. 3    schematisch die aufgrund der direkten Modulation erzielte Frequenz $\nu$ über der Zeit t zur Erzielung der Heterodynfrequenz $\Delta\nu$, und

Fig. 4    ein Diagramm mit einem Interferenz-Ausgangssignal im oberen Teil und dem zugehörigen Laserdioden-Injektionsstrom im unteren Teil.

Beschreibung des Ausführungsbeispiels

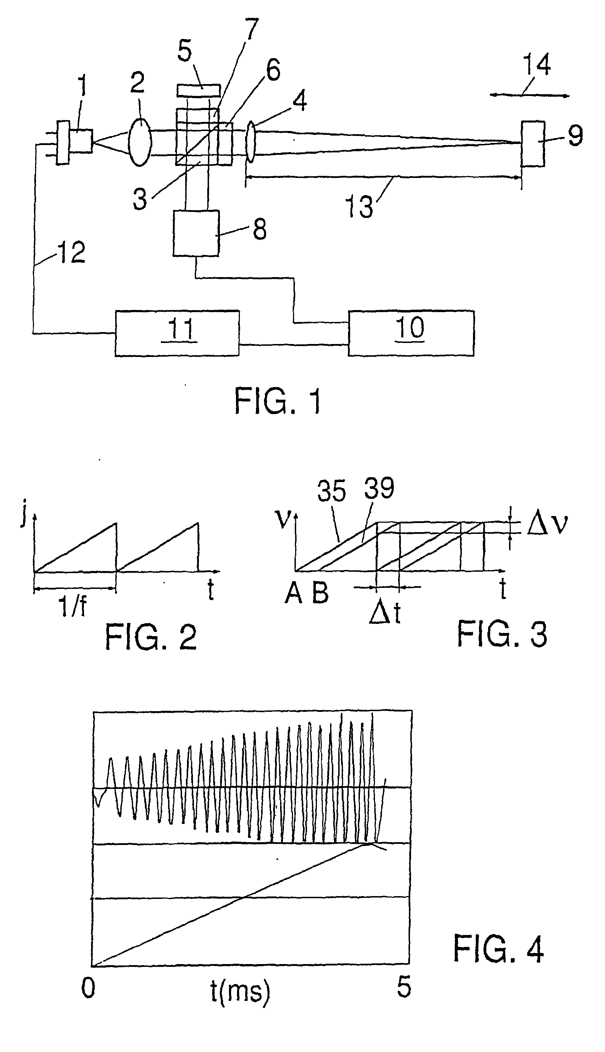

In Fig. 1 sind in schematischer Darstellung die wesentlichen Komponenten des erfindungsgemäß gestalteten direkt modulierten Laservibrometers gezeigt. Für die Schwingungsmessung, insbesondere die axiale, die sogenannte out of plane Schwingungsmessung, wird ein Michelson-Interferometer verwendet. Eine Laserdiode 1 emittiert Licht, das von einer Linse 2 in parallelem Strahlengang auf einen Polarisationsstrahlteiler 3 gelenkt wird. Ein Teil des Strahls wird direkt durchgeleitet zu einer Abbildungslinse 4 und eine zweiter Teil des Strahls wird um 90° abgelenkt auf einen Spiegel 5. Zwischen dem Polarisationsstrahlteiler 3 und jeweils der Linse 4 bzw. dem Spiegel 5 sind Viertelwellenplatten 6 und 7 angeordnet. Die Viertelwellenplatte 7 bewirkt dabei, daß der am Spiegel 5 reflektierte Strahl so gedreht wird, daß er komplett durch den Polarisationsstrahlteiler 3 hindurch auf eine Photodetektoreinheit 8 gelenkt wird. Die Viertelwellenplatte 6 bewirkt dabei, daß der von einem Meßobjekt 9 reflektierte Strahl im Polarisationsstrahlteiler 3 komplett um 90° umgelenkt und in die Photodetektoreinheit 8 hineingelenkt wird.

Das Ausgangssignal der Photodetektoreinheit 8, das aus der Überlagerung der beiden reflektierten Strahlen entstandene Interferenzsignal, wird einer Auswertelektronik 10 zugeführt. Dieser wird auch ein Signal eines Strommodulators 11 zugeführt, welcher andererseits die Laserdiode 1 über eine Leitung 12 gemäß der Erfindung mit moduliertem Injektionsstrom j versorgt. Der Abstand zwischen der Abbildungslinse 4 und dem Meßobjekt 9 bildet einen optischen Umweg 13 bzw. einen Arm des Interferometers. Dieser Interferometerarm 13 ist erfindungsgemäß gegenüber dem Referenzarm wesentlich verlängert. Der Wert d.h. die Länge dieses optischen Umwegs kann insbesondere größer als 20 cm und bis zu etwa 100 cm betragen. Das Messobjekt 9 schwingt insbesondere in Richtung des Doppelpfeils 14. Diese Schwingungsrichtung entlang des Strahlengangs wird die axiale bzw. out of plane Richtung genannt.

Der Injektionsstrom der Laserdiode 1 wird, wie in Fig. 2 beispielhaft dargestellt, sägezahn- bzw. dreieckförmig moduliert, und zwar mit der Amplitude j und der Frequenz f. In Fig. 2 ist die Amplitude j über der Zeit t aufgetragen. Infolge eines thermischen Effekts wird durch die Änderung der Brechzahl die optische Länge des Resonators verändert. Dies erzeugt eine Modulation der Frequenz der Laserstrahlung. Der Frequenz-Strom-Koeffizient $\beta$ ist für verschiedene Laserdioden unterschiedlich und hängt von Temperatur und Modulationsfrequenz ab. Er kann beispielsweise eine Größe von etwa 3 GHz/mA haben.

Wie in Fig. 1 dargestellt, wird der Lichtstrahl der Laserdiode 1 im Polarisationsstrahlteiler 3 aufgeteilt. Die vom Spiegel 5 und die vom Meßobjekt 9 reflektierte, zurücklaufenden Wellen erreichen die Photodetektoreinheit 8 zu unterschiedlichen Zeiten.

In Fig. 3 ist über der Zeit t die Frequenz $\nu$ aufgetragen, um in schematischer Weise die Verhältnisse bei der Überlagerung der auf die Photodetektoreinheit 8 treffenden Signale darzustellen. Die beiden reflektierten Wellen sind mit 35 und 39 bezeichnet und erreichen die Photodetektoreinheit 8 zu den beiden mit A und B bezeichneten unterschiedlichen Zeitpunkten. Der sich dadurch ergebende Laufzeitunterschied $\Delta t$ entspricht der Laufzeit des Laserlichtstrahls durch den wesentlich verlängerten Interferometerarm 13 mit der Länge $\Delta L$. Infolge des Laufzeitunterschieds $\Delta t$ ergibt sich ein entsprechender Frequenzunterschied $\Delta \nu$ für die beiden reflektierten Wellen 35 und 39. Dieser Frequenzunterschied wird auch als die Überlagerungsbzw. Heterodynfrequenz bezeichnet und kann mit Hilfe der nachfolgenden Gleichung bestimmt werden:

$$\Delta \nu = j * \beta * f * \Delta L * c^{-1}$$

In Fig. 4 ist über der Zeitachse t, angegeben hier in Millisekunden ms, im oberen Teil ein Beispiel für ein gemessenes Interferenz-Ausgangssignal, nämlich zwei Lichtwellen mit unterschiedlicher Frequenz, dargestellt und im unteren Teil der zugeordnete sägezahnförmige Injektionsstrom.

Anhand eines Zahlenbeispiels und der vorstehend genannten Gleichung, soll nachfolgend ein Wert für die Frequenzverschiebung verdeutlicht werden:

| | |
|---|---|
| j = 2 mA | Amplitude der Strommodulation |
| $\beta = 3 * 10^9$ Hz/mA | Frequenz-Stromkoeffizient der Laserdiode |
| $f = 10^6$ Hz | Frequenz der Strommodulation |
| $\Delta L = 2*50$ cm = 1 m | Doppelter Abstand zwischen Laservibrometer und Objekt |

$$\Delta \nu = 2*3*10^9*10^6/3*10^8 \qquad \Rightarrow \qquad \Delta \nu = 20 \text{ MHz.}$$

Somit wird durch die Erfindung ein Laservibrometer zur Verfügung gestellt, das mit einfachen Mitteln, direkte Strommodulierung der Laserdiode und wesentliche Verlängerung eines Interferometerarmes, die für die Richtungserkennung der axialen Schwingung des Meßobjektes erforderliche Frequenzverschiebung erreicht.

Dieses erfindungsgemäß gestaltete Laservibrometer ist in besonders vorteilhafter Weise in verschiedenen Anwendungsfeldern mit großem Nutzen einsetzbar. So kann er entsprechend einem ersten Beispiel besonders vorteilhafte Verwendung finden, um für die Schwingungsmessung an Geräten oder Bauteilen davon Stellen zu ermitteln, die starke und/oder unangenehme Geräusche verursachen oder an denen durch hohe und/oder frequenzmäßig besonders kritische Schwingungsamplituden Bruchgefahr und/oder die Gefahr vorzeitigen Verschleißes besteht.

Ein weiteres Beispiel der besonders vorteilhaften Verwendung des erfindungsgemäß gestalteten Laservibrometers sieht vor, daß er für die Schwingungsmessung an Geräten oder Bauteilen davon eingesetzt wird, um rhythmisch wiederkehrende Schwingungen zu ermitteln, die auswertungsmäßig insbesondere in Drehzahlen von Verbrennungsmotoren umgewandelt werden können.

**Patentansprüche**

1. Laservibrometer für Schwingungsmessungen, der nach dem Prinzip des heterodynen Interferometers arbeitet, mit einer Laserdiode (1) zur Erzeugung der Laserstrahlung und Mittel (11) zur Modulierung der Frequenz der Laserstrahlung zur Erzielung der notwendigen Frequenzverschiebung ($\Delta v$), wobei
ein Interferometerarm (13) gegenüber dem anderen Interferometerarm verlängert ist,
die Verlängerung größer als 20 cm und bis zu 100 cm beträgt, und
für die axiale, sogenannte out of plane Schwingungsmessung (14), ein Michelson-Interferometer vorgesehen ist.

2. Laservibrometer nach Anspruch 1, **dadurch gekennzeichnet, dass** als Mittel zur Modulierung der Frequenz der Laserstrahlung ein Strommodulator (11) vorgesehen ist, mit dessen Hilfe der Laserinjektionsstrom moduliert wird.

3. Laservibrometer nach Anspruch 2, **dadurch gekennzeichnet, dass** der Laserinjektionsstrom dreieckförmig oder sägezahnförmig moduliert wird.

4. Laservibrometer nach Anspruch 3, **dadurch gekennzeichnet, dass** die dreieckförmige bzw. sägezahnförmige Modulation mit einer Amplitude j und einer Frequenz f der Strommodulation erfolgt.

5. Laservibrometer nach Anspruch 4, **dadurch gekennzeichnet, dass** die Amplitude j der Strommodulation im Bereich einiger mA und die Frequenz f der Modulation im Bereich von einem bis zu einigen MHz liegt.

6. Laservibrometer nach einem der vorigen Ansprüche, **dadurch gekennzeichnet, dass** ein Polarisationsstrahlteiler (3) mit zwei Viertelwellenplatten (6, 7), jeweils eine im Referenzstrahlgang und eine im Messobjektstrahlgang, vorgesehen ist.

7. Laservibrometer nach einem der vorigen Ansprüche, **dadurch gekennzeichnet, dass** der Interferometerarm (13) im Strahlengang zum Meßobjekt (9) der längere Interferometerarm ist.

8. Verfahren für die Schwingungsmessung an Geräten oder Bauteilen davon, unter Verwendung eines Laservibrometers nach einem der Ansprüche 1 bis 7,
wobei
der Laservibrometer derart angeordnet wird, dass das Gerät oder ein Bauteil davon das Messobjekt (9) bildet, und
die axiale, sogenannte out of plane Schwingung (14) des Gerätes oder des Bauteils davon mit dem Laservibrometer gemessen wird,
um Stellen zu ermitteln, die starke und/oder unangenehme, störende Geräusche verursachen, und/oder,
um Stellen zu ermitteln, an denen durch hohe und/oder frequenzmäßig besonders kritische Schwingungsamplituden Bruchgefahr und/oder die Gefahr vorzeitigen Verschleißes besteht, und/oder,
um rhythmisch wiederkehrende Schwingungen zu ermitteln, die auswertungsmäßig in Drehzahlen, insbesondere von Verbrennungsmotoren, umwandelbar sind.

**Claims**

1. Laser vibrometer for vibration or oscillation measurements, which operates on the principle of a heterodyne interferometer,
having a laser diode (1) for producing the laser radiation and means (11) for modulating the frequency of the laser radiation in order to achieve the required frequency shift ($\Delta v$),
with
one interferometer arm (13) being lengthened with respect to the other interferometer arm,
the extension being greater than 20 cm and up to 100 cm, and
a Michelson interferometer being provided for the axial, so-called out-of-plane vibration or oscillation measurement (14).

2. Laser vibrometer according to Claim 1, **characterized in that** a current modulator (11) is provided as the means for modulating the frequency of the laser radiation, with whose aid the laser injection current is modulated.

3. Laser vibrometer according to Claim 2, **characterized in that** the laser injection current is modulated with a triangular or sawtooth waveform.

**4.** Laser vibrometer according to Claim 3, **characterized in that** the triangular or sawtooth waveform modulation is produced with an amplitude j and a frequency f of the current modulation.

**5.** Laser vibrometer according to Claim 4, **characterized in that** the amplitude j of the current modulation is in the region of a few mA, and the frequency f of the modulation is in the region of one up to a few MHz.

**6.** Laser vibrometer according to one of the preceding claims, **characterized in that** a polarization beam splitter (3) is provided having two quarter-wave plates (6, 7), one of which is in the reference beam path, and one in the measurement object beam path.

**7.** Laser vibrometer according to one of the preceding claims, **characterized in that** the interferometer arm (13) in the beam path to the measurement object (9) is the longer interferometer arm.

**8.** Method for vibration or oscillation measurement in appliances or components of appliances, using a laser vibrometer according to one of Claims 1 to 7,
with
the laser vibrometer being arranged such that the appliance or a component of said appliance forms the measurement object (9), and the axial, so-called out-of-plane vibration or oscillation (14) of the appliance or of the component of said appliance is measured using the laser vibrometer,
in order to determine points which cause severe and/or unpleasant, disturbing noise, and/or in order to determine points at which there is a risk of fracture and/or a risk of premature wear due to high vibration or oscillation amplitudes at particularly critical frequencies, and/or
in order to determine cyclically recurrent vibration or oscillations which can be converted, for evaluation purposes, into rotation speeds, in particular of internal combustion engines.

**Revendications**

**1.** Vibromètre à laser pour des mesures de vibrations fonctionnant selon le principe de l'interféromètre hétérodyne, comprenant :

une diode laser (1) pour générer le faisceau laser et des moyens (11) pour moduler la fréquence du faisceau laser et obtenir le décalage de fréquence (Δν), nécessaire,
vibromètre dans lequel
un bras (13) de l'interféromètre est prolongé par rapport à son autre bras,
l'allongement est supérieur à 20 cm et peut aller jusqu'à 100 cm et,
un interféromètre de Michelson assure la mesure de la vibration axiale (14), dite en dehors du plan.

**2.** Vibromètre à laser selon la revendication 1,
**caractérisé en ce que**
le moyen de modulation de la fréquence du faisceau laser est un modulateur d'intensité (11) à l'aide duquel on module le courant d'injection du laser.

**3.** Vibromètre à laser selon la revendication 2,
**caractérisé en ce que**
le courant d'injection du laser est modulé suivant une courbe en triangle ou en dents de scie.

**4.** Vibromètre à laser selon la revendication 3,
**caractérisé en ce que**
la modulation en dents de scie ou en triangle se fait avec une amplitude (j) et une fréquence (f) de la modulation de courant.

**5.** Vibromètre à laser selon la revendication 4,
**caractérisé en ce que**
l'amplitude (j) de la modulation de courant se situe dans le domaine de quelques (mA) et la fréquence (f) de la modulation dans le domaine allant jusqu'à quelques MHz.

**6.** Vibromètre à laser selon l'une des revendications précédentes,

**caractérisé par**
un diviseur de faisceau à polarisation (3) avec deux plaques de quart de longueur d'ondes (6, 7) placées chaque fois dans un chemin de faisceau de référence et dans un chemin de faisceau d'objet de mesure.

7. Vibromètre à laser selon l'une des revendications précédentes,
**caractérisé en ce que**
le bras (13) de l'interféromètre dans le chemin du faisceau vers l'objet de mesure (9) est le bras long de l'interféromètre.

8. Procédé de mesure de vibrations sur des appareils ou des pièces en utilisant un vibromètre à laser selon l'une quelconque des revendications 1 à 7,
procédé selon lequel
le vibromètre à laser est installé de façon que l'appareil ou une pièce de celui-ci constitue l'objet de mesure (9) et, on mesure la vibration (14), axiale, hors du plan de l'appareil ou de la pièce à l'aide du vibromètre à laser,
pour déterminer les endroits engendrant des bruits forts et/ou gênants ou perturbateurs et/ou pour déterminer les endroits aux niveaux desquels on rencontre un risque de rupture et/ou d'usure prématuré à cause des amplitudes d'oscillations particulièrement critiques du fait de la fréquence et/ou de l'amplitude et/ou
pour déterminer les vibrations répétées de manière rythmique pour les convertir selon l'exploitation des vitesses de rotation notamment pour des moteurs à combustion interne.

FIG. 1

FIG. 2

FIG. 3

FIG. 4